# EUROPEAN PATENT APPLICATION

(11) **EP 3 663 878 A1**
(43) Date of publication of application: **10.06.2020**
(21) Application number: 18210096.6
(22) Date of filing: 04.12.2018
(51) Int. Cl.: G05B 19/4099

(54) **METHOD OF DESIGNING AN INTERMEDIATE PRODUCT, COMPUTER PRO-GRAM PRODUCT, METHOD OF ADDITIVE MANUFACTURING, METHOD OF MANUFACTURING A COMPONENT AND A CORRESPONDING COMPONENT**

(71) Applicant: Siemens Aktiengesellschaft, 80333 München (DE)
(72) Inventor: Bambach, Markus, 03046 Cottbus (DE); Fergani, Omar, 13347 Berlin (DE); Geisen, Ole, 10781 Berlin (DE)

(57) **Abstract**

A method of designing an intermediate product (IP) for additive manufacturing is presented. The method comprises calculating (a) a geometry (P2, D2) of the intermediate product (IP), wherein deformation (D) as a consequence of a subsequent forging process the additively manufactured intermediate product (IP) is subjected to in order to provide for a final component (10) is considered (IP) via accounting for a design of the final component (D2) by means of a form finding and/or parametric algorithm. Further, a corresponding computer program product, method of additive manufacturing, method of manufacturing a component and a corresponding component are provided.

## Description

The present invention relates to a method of designing a preform, semi-finished or intermediate product for additive manufacturing, i.e. preferably for a subsequent additive manufacture of said intermediate product. Further, a corresponding computer program product being configured to calculate a design and/or a geometry of the intermediate product is presented. Still further, a corresponding additive manufacturing process for the intermediate product and a method of manufacturing of the final component, being manufactured from the intermediate product, is presented along with the component itself.

Preferably, the component denotes a component applied in a turbo machine, e.g. in a compressor section or the flow path hardware of a gas turbine.

Turbo machines, particularly those for power generation purposes, are subject to steady development in order to increase efficiency. This development is actually gaining significance in view of the challenges to comply with the restrictions of climate change and global warming mitigation. Further progress in turbine efficiency is e.g. complicated as operation temperatures of the hot gas path of gas turbines, would yet have to be increased. At the same time there is a stringent demand to apply the turbo machines in a less steady operational mode, e.g. on demand in peaker plants when there is a high demand for electricity, for example. This poses significant challenges particularly for the materials applied in the given machines, as the discontinuous use (on demand) highly increases material fatigue due to the frequently involved warming and cooling cycles and therewith the number of the so-called "equivalent operating hours". Thermo-mechanical fatigue and creep behaviour constitute the issues which pose the main challenges for blade material of turbo machines.

The component is, thus, preferably made of a nickel- or cobalt-based superalloy, particularly a precipitation hardened alloy. Additionally or alternatively, the component may relate to a component of a titanium-based, aluminum-based or iron-based material and applied in the energy sector, automobile or aircraft industry.

Additive manufacturing techniques comprise e.g. for powder bed fusion methods, selective laser melting (SLM), selective laser sintering (SLS) or electron beam melting (EBM).

A method of selective laser melting is described in EP 2 601 006 B1, for example.

A method for producing forged products using additive manufacturing to produce a metal shaped preform and subsequently forging said preform is described e.g. in US 2015/0013144 A1.

Additive manufacturing and/or powder bed fusion (PBF) methods have proven to be useful and advantageous in the fabrication of prototypes or complex components, such as components with a mazelike or convoluted structure or functionally cooled components. Further, the additive manufacture stands out for its short chain of process steps which in turn enables material economization and a particularly low lead time.

Powder-bed-based or powder bed fusion manufacturing methods, such as SLM, SLS or EBM are relatively well-known methods for fabricating, prototyping or manufacturing parts or components from a powdery base material, for instance. Conventional apparatuses or setups for such methods usually comprise a manufacturing or build platform on which the component is built layer-by-layer after the feeding of a layer of base material which may then be melted, e.g. by the energy of a laser beam and subsequently solidified. The layer thickness is determined by a recoater or wiper that moves, e.g. automatically, over the powder bed and removes excess material from a manufacturing plane or build space. Typical layer thicknesses amount to between 20 µm and 40 µm. During the manufacture, said laser beam scans over the surface and melts the powder on selected areas which may be predetermined by a CAD-file according to the geometry of the component to be manufactured.

A computer program product as referred to herein may relate to a computer program means constituting or comprising a storage medium like a memory card, a USB stick, a CD-ROM, a DVD or a file downloaded or downloadable from a server or network. Such product may be provided by a wireless communication network or via transfer of the corresponding information or file by the given computer program, computer program product or computer program means.

Today, blades and/or vanes for turbo machines or corresponding compressors are manufactured conventionally using processes which require a fairly long process chain consisting of several, such as up to four forging, operations and in addition intermediate processes like deburring, cleaning and application of protective coatings and reheating to forging temperature. Each forging operation requires a set of dedicated dies, leading to high production costs, material waste and process time. Further, as a drawback, the traditional manufacturing methodology does not alloy for a reasonable design flexibility in terms of internal cavities or hollow features, such us cooling channels and comparable integrated features. According to the conventional manufacturing route, cooling channels can e.g. only be generated after the forging step which limits the geometrical complexity of said features.

Today or in the future, thanks to additive manufacturing (AM), the production of near-net-shape metallic components has become possible.

However, there is a lack of methodologies to provide high-end components or components from high-end materials in terms of functionality and performance in a cost-effective manner. Particularly, at present, there is yet no solution to the problem of designing and manufacturing high performance components with internal cavities or internal features using a superposition of additive manufacturing and forging.

As suggested above, US 2015/0013144 A1 introduces a concept of combining additive manufacturing and forging to produce, particularly titanium-based components with higher performance or hybrid parts consisting of two materials. This approach, however, lacks of providing an according solution for complex parts, e.g. parts with internal cavities, such as cooling channels. In addition, there is the demand to award the given component with predefined or desired material properties, e.g. based on a thorough understanding of the thermo-mechanical issues involved.

It is an object of the present invention to provide means that approach the given problems, particularly to provide a novel methodology, with which the advantages of additive manufacturing and forging methods can both be exploited, but without at least some of the accompanying drawbacks of the single approaches.

The mentioned object is achieved by the subject-matters of the independent claims. Advantageous embodiments are subject-matter of the dependent claims.

An aspect of the present invention relates to a method of designing, configuring or constructing an intermediate product for additive manufacturing or as the case may be an additively manufactured or "AM preform". Preferably, said preform or intermediate product is designed with an internal cavity, in order award the final component also with an internal feature.

A skilled person comprehends that a method of designing which is suitable for additive manufacturing requires to account for certain implications, e.g. of corresponding powder bed fusion processes, such as a material shrinkage during solidification and/or the difficulty to manage overhanging regions with support structures in the powder bed.

The method comprises calculating and/or simulating a, preferably pre-defined, geometry of the intermediate product, wherein deformation as a consequence of a subsequent forging process, the additively manufactured intermediate product is or will subsequently be, subjected to in order to provide for the final component is considered via accounting for a design of the final component by means of a form finding and/or parametric algorithm or methodology.

Said form finding and/or parametric algorithms may relate to algorithmic and/or computer implemented designing which enables the definition of parameters and rules which may, in turn, clarify and/or encode the relationship between a design intent and a design response. Said algorithms may as well relate to propagation-based systems, wherein a calculation from "known" to "unknown" is carried out, e.g. with a dataflow model. A form finding algorithm may be a particular strategy being implemented through the given propagation-based systems. Thereby, a design goal may be optimised against a set of design constraints, for example.

Parameters which relate to the given parametric approach may include all necessary, standard, known or set forging parameters, such as forging velocity, forging pressure, temperature, die geometry, strain direction and as well required process parameters for additive manufacturing (see below). The latter parameters may relate to those which are required to reliably carry out an additive manufacturing process in a standardised, or reproducible way.

The terms "geometry" and/or "design" preferably includes an inner (cavity) and an outer appearance of the given structure or model. Additionally or alternatively, a location, a dimension and e.g. an orientation of a cavity or feature or the intermediate product itself may be included.

As an advantage of the provided method of designing, features, such as cooling channels or other functional cavities in the intermediate product or preform may be integrated or applied to forging processes of complex components with internal cavities, e.g. components which cannot otherwise be manufactured or integrated into forged components. As well, the given approach using additive manufacturing can, e.g. during the forging, be thermally treated to modify and improve the material phases of the component, e.g. in terms of microstructural improvements. In other words, structural quality or integrity of the given components may be improved significantly as compared to the structure of the (additively) as-manufactured preform. In addition, a residual porosity which may be intrinsic to selective melting or sintering processes may further be reduced or completely prevented of during the forging.

Further advantages of the provided methodology relate to the possibility of a more accurate an improved forging, e.g. with a better control of material flow, a better positioning of the respective preform in the die, a reduction of flash, and a reduction of die loading during forging and, thus, an extension of lifetime of the die components.

In an embodiment the final component comprises an internal cavity, e.g. cooling channels or other functional cavities, and the intermediate product is designed with an internal cavity or as the case may be with a geometry comprising or enclosing an internal cavity as well.

In an embodiment the calculation of the geometry comprises providing for an oversize geometry of the intermediate product, wherein e.g. thermo-mechanical loads during the forging process are considered, anticipated in/or calculated. This is actually the normal mode, as a forging process usually requires and causes deformation, more particularly compression or shrinkage of most of the regions, of said preform. The final geometry may be defined by an according forging die.

The term "thermo-mechanical" is to be understood in here preferably as including mere thermal loads as well as mere mechanical loads and any superposition or mixture thereof.

In an embodiment, the calculation of the geometry comprises proposing or suggesting an oversize or oversize geometry of the intermediate product, e.g. to an operator or user of a computer, data processing and/or additive manufacturing device. The definition of the given oversize geometry is preferably part of the calculation and/or the form finding or parametric algorithm as described.

In an embodiment, process parameters of an additive manufacturing method for the intermediate product, material properties and/or design features of the cavity of the final component are defined or chosen automatically or semi-automatically, e.g. in conjunction with a man-machine-interface of a corresponding computer, data processing and/or additive manufacturing device.

According to these embodiments, an additive manufacturing engineer or operator is preferably included in the designing procedure of the geometry of the intermediate product or preform. A skilled person comprehends that the use of a man-machine-interface in the described context is more than a mere indication of information to the operator. Rather, the interaction between said computer or tool with the operator may become increasingly necessary for reliable and optimized modern manufacturing routes, as mere manual manufacturing steps may lack of the required calculation and computing capabilities.

Mere machine-based manufacturing steps on the other hand may not yet be available and it may be necessary to gather further information, knowledge and design know-how from the operator in order to arrive at a reasonable result or design proposal for the geometry of the intermediate product. In this regard, the respective man-machine-interface or user interface may indeed only enable a reliable and time efficient designing method.

In an embodiment, the process parameters are defined, e.g. layerwise and localised, considering a desired or defined material structure of the intermediate product and/or the final component, e.g. a desired structural rigidity or stability or grain distribution, e.g. including grain size as well as grain orientation. For a list of expedient process parameters to be defined, see the detailed description of exemplary embodiments below.

In an embodiment, an additive manufacturing method for the manufacture of the intermediate product is a powder bed fusion method, preferably selective laser melting or electron beam melting. According to this embodiment, the advantages of the mentioned powder bed fusion methods, particularly in terms of design freedom and spatial resolution, may be exploited.

In an embodiment, the additive manufacturing method for the manufacture of the intermediate product is a directed energy deposition (DED) method, such as laser cladding or laser metal deposition method (LMD).

A further aspect of the present invention relates to a computer program and/or a computer program product comprising instructions which, when the according computer program is executed by a computer or data processing device, cause the computer to carry out the calculation of the geometry of the intermediate product as described above. The described computer program, its instructions or the given computer program product may as well be stored on a storage device which may then further constitute an aspect of the present invention.

A further aspect of the present invention relates to a method of additive manufacturing the intermediate product, particularly by selective laser melting or electron beam melting, according to the design as calculated or provided by the method of designing as described above.

In an embodiment, the intermediate product is provided with a cavity during the additive manufacture and under consideration of the given subsequent forging process and via accounting for the design of the final component by means of the described form finding or parametric algorithm means.

In an embodiment, the intermediate product is provided with positioning features during the additive manufacture, wherein the positioning features allow for positively and adequately positioning the intermediate product in a forging apparatus for the subsequent forging step. The positioning features may enable the subsequent forging process to be carried out at all, as the described designing or definition of geometry of the intermediate product may require a highly accurate positioning.

A further aspect of the present invention relates to a method of manufacturing the component comprising providing the intermediate product as described, and subsequently, forging the intermediate product, preferably by a one-step die forging process, in order to provide for the component, wherein the forging is carried out such that the intermediate product is deformed as considered by the described method of designing (cf. above). The forging process, and preferably along with it the provided thermal and mechanical loads, particularly allow for an optimisation of microstructure or structural quality of the final component as compared to a case where the geometry of the final component were to be manufactured additively without forging. This may be the case, as a forging strain may allow for a material strengthening and/or improvement of grain orientation and/or structural rigidity of the final component.

In an embodiment, the intermediate product is manufactured additively out of a powder bed and provided with the cavity.

In an embodiment, the base material, such as a powder, for the manufacture of the intermediate product at least partly remains in the cavity of the intermediate product during the forging in order to avoid for a structural collapse or crack of its structure.

In an embodiment, the intermediate product is manufactured additively out of a plurality of constituents or ingredients, such as base materials and wherein at least two or some of these constituents are mixed, adhesively joined or modified during the forging. According to this embodiment, the forging may in addition to the optimisation of microstructure enable a joining of material phases or compositions, e.g. in order to provide compound materials or specific alloys which may not be achieved otherwise.

In an embodiment, the method comprises post-processing, such as thermal treatment, working and/or machining of the final component.

A further aspect of the present invention relates to a component being manufactured or manufacturable by the method as described previously, wherein the component is a blade or vane of a turbo machine, such as a compressor blade of a gas turbine.

Advantages and embodiments relating to the described method of designing and/or the described computer program (product) may as well relate to the presented methods of manufacturing and/or the described component, and vice versa.

Further features, expediencies and advantageous embodiments become apparent from the following description of the exemplary embodiment in connection with the Figures.

The term "and/or" as used herein shall mean that each of the listed elements may be taken alone or in conjunction with two or more of further listed elements.
- Figure 1: indicates, in a schematic view, an additive powder bed fusion process with a component shown during its additive manufacture.
- Figure 2: shows a schematic flow chart indicating structural and/or method steps according to the present invention.
- Figures 3 to 7: indicate the manufacture of the component by sequentially showing a manufacturing status of the given preform or the component.

Like elements, elements of the same kind and identically acting elements may be provided with the same reference numerals in the Figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

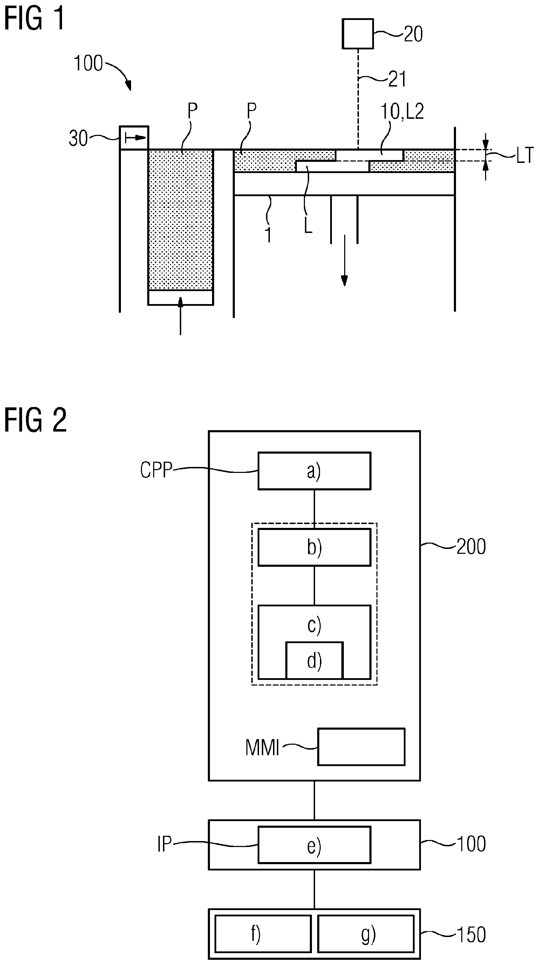

Figure 1 shows an additive manufacturing device 100. The device 100 may constitute a state-of-the-art hardware for selective laser melting or electron beam melting. The device 100 may, thus, pertain to a powder bed fusion method, such as selective laser melting, selective laser sintering or electron beam melting. The device 100 comprises a build platform 1. On the build platform 1, a component 10 is, preferably, directly manufactured, i.e. welded. Preferably the component 10 is buildup in the device 100 out of a powder bed P. Said component or part 10 preferably relates to a turbine component, such as a compressor component or even a component applied in the hot gas path of a gas turbine (not explicitly indicated).

Particularly, the component 10 may relate to a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit kit. Alternatively, said component may relate to another or similar component.

In Figure 1, the component 10 is preferably depicted during its manufacture and only partly established. It is indicated that, after the deposition of a powder layer, e.g. with the aid of a deposition apparatus 30, an energy beam 21 is used to selectively melt the powder for the layerwise buildup of the component 10. A layer thickness of the layer may amount to LT, as indicated on the right in Figure 1.

Said energy beam 21 is, preferably, emitted from an irradiation apparatus 20, such as an electron beam or laser source. After the local melting due to the energy beam 21, the material expediently solidifies in the final structure for the component 10.

After a layer has been manufactured, the platform 1 is preferably lowered by a distance corresponding to the layer thickness LT. Further, the deposition apparatus 30 preferably distributes a further powder layer which may be moved from a stock or supply (not explicitly numerically indicated) of the respective powdery base material P as shown in the left of Figure 1.

Figure 2 indicates, by way of a schematic flow chart, a method or methodology according to the present invention. The inventive method may partly or entirely be provided or carried out by a computer program and/or a corresponding algorithm. The inventive method is preferably a method of designing an intermediate product IP, such as a preform for additive manufacturing. To this effect, the complete or completely defined design may constitute a computer program product CPP or product of said computer program. Expediently, said computer program may be carried out by a computer or data processing device 200, e.g. as part of an additive manufacturing device 100 (cf. above).

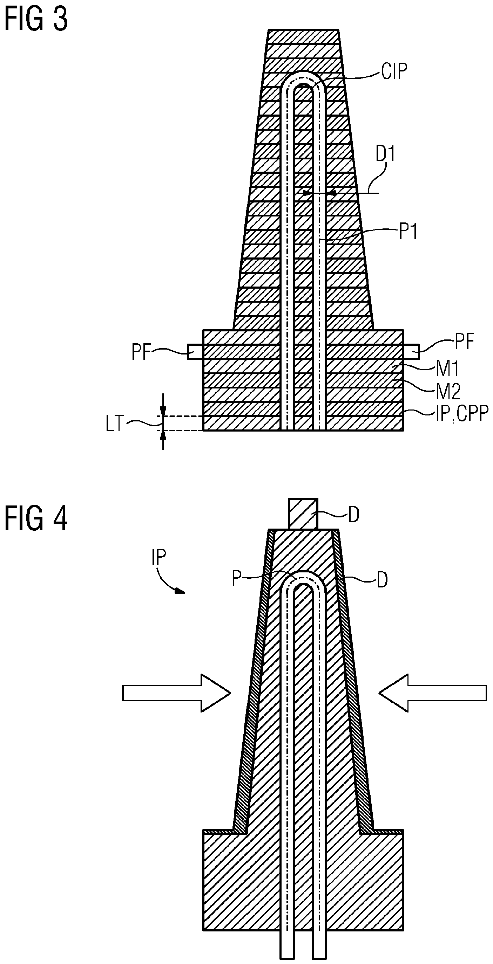

The method comprises calculating (cf. step a)) a geometry and/or a design of the intermediate product IP. Said design is preferably the result of a parametric or form finding algorithm. Particularly, during the calculation, a deformation (cf. reference numeral D in Figure 3 below) as a consequence of a later forging process is considered. To this effect, the calculation of the geometry of the intermediate product IP expediently comprises providing (cf. step b)) an oversize geometry of the intermediate product, wherein thermo-mechanical loads during the forging process are considered or accounted for.

The geometry or oversize geometry may as well be proposed (cf. step (b)) e.g. by a man-machine-interface MMI or user interface of the computer or device 200.

Preferably, during the calculation, process parameters of an additive manufacturing method for the intermediate product IP, material properties and/or design features of a cavity (cf. reference numerals CIP and CC in Figure 3 below) of the final component 10 are defined (cf. step c)), such as defined automatically or semi-automatically, e.g. in conjunction with the man-machine-interface MMI of the data processing device 200.

The process parameters may e.g. be defined (cf. step d)), layerwise and localized, such as varying spatially and considering a desired material structure of the intermediate product IP and/or the final component 10, e.g. a desired structural rigidity or grain distribution.

The number of process parameters accordingly describing or (comprehensively) characterizing a layer L for a structurally complex component 10 may easily exceed the number of 100. Just to give further examples said parameters may relate to: Layer thickness, melt pool geometry, heat impact per volume or area unit, laser wavelength, hatching distance, i.e. distance of adjacent scanning lines, beam speed, geometry of beam spot, beam angle, type of purge gas, flow rate of purge gas, flow rate of possible exhaustion gas, states of gas valves, set ambient pressure prior to or during build job, preheating temperature and conditions, state of base material, i.e. the quality, and many more.

The presented methodology further comprises a method of additive manufacturing the intermediate product IP (cf. step (e)), particularly by selective laser melting or electron beam melting, according to the design as provided by the method of designing as described herein.

Moreover, a method of manufacturing a component 10 is provided, the method comprises providing (cf. step (e)) an intermediate product IP, such as by way of additive manufacturing as described, and forging (cf. step (f)) the intermediate product IP in order to provide for the component 10.

Said forging is preferably carried out in a forging apparatus 150. Further, the forging is expediently carried out such that the intermediate product IP is deformed according to a considered target geometry or design goal. The method of manufacturing may further comprise a post-processing (cf. step (g)), such as thermal treatment, working or machining of the component 10 (cf. also Figure 3).

Preferably, the component 10 manufactured by the given method is a blade or vane of a turbo machine, such as a compressor blade of a gas turbine.

Said compressor blade is preferably a complex component with internal functional channels or cavities, such as a component which can be cooled by a cooling fluid during operation, e.g. in order to allow for a higher operating temperature. Said component 10 may as well relate to a turbine blade or vane of a turbine rotor.

Figures 3 to 7 illustrate a manufacturing sequence or methodology as an aspect of the present invention by way of different (subsequent) states in the manufacture.

Figure 3 shows an additive manufactured preform or intermediate product IP. The image may relate to a merely calculated design and/or to the physically and additively provided (cf. step (e) above) structure for the intermediate product IP.

The intermediate product IP comprises a cavity CIP. The cavity CIP is indicated as a single cooling channel with a fluid inlet and a fluid outlet in the lower part of the preform (fluid openings are not explicitly indicated in the Figures). Said preform is preferably additively manufactured layerwise (cf. vertical lines) with a buildup direction directing to the tip of the preform parallel to its longitudinal axis (cf. Figure 1 and vertical upper direction in Figure 3).

During the designing process, the geometry or design of the intermediate product IP, an oversize is considered which is - by way of a later forging step - reduced to a target geometry (cf. Figures 3 to 7 and step b) in Figure 2). Thereby, preferably, thermo-mechanical loads as well as the resulting microstructure are considered and/or optimized.

The cavity or channel CIP comprises a diameter D1. The cavity or channel CIP further comprises or is located at a position PI, as indicated by the dashed line in the lower right image of Figure 3. Preferably, the diameter or dimensional D1 as well as the position P1 indicate the oversize dimension of the intermediate product IP.

By the above-mentioned man-machine-interface MMI, a user may e.g. define a minimum and/or maximum radius or diameter for the cavity CIP. A corresponding value therefore may be selected by the device 200 and proposed to an operator in the form of an electronic library or catalogue. Thereby, also, a recommendation of design features of the cavity of the intermediate product CIP may be given. The operator or engineer may as well have the possibility to input and elaborate e.g. together with the device 200 an optimal parameter set for the manufacture of the intermediate product IP and the component 10. Said parameter set may relate to process parameters of the additive process as well as to the forging modalities.

Preferably, the intermediate product IP is further provided with positioning features FP during its additive manufacture. The positioning features FP allow for adequately positioning the intermediate product IP in a forging apparatus 150 downstream of the presented methodology. This forging is illustrated in a simplified way by way of Figure 4, wherein the arrows pointing to the centre of the image respectively indicate a forging force of strain, the intermediate product IP is preferably subjected to during the proposed forging step (cf. reference numeral f) in Figure 2).

The forging is preferably a die forging step comprising according dies for an adequate defining of the target geometry (dies are not explicitly indicated in the Figures). Further, the forging is preferably carried out at a forging temperature as may be known to a skilled person. The forging temperature may expediently be chosen in dependence of the respective material, such as titanium-base, aluminum-base, nickel-based or cobalt-based alloys, such as superalloys or any further materials, compressor blades of gas turbines are usually made of.

Through the forging, the lateral sides of the intermediate product IP respectively experience a compression or shrinkage, e.g. at the airfoil portion, i.e. e.g. suction side and pressure side of said blade. At the blade tip, and possibly at the blade root, material of the intermediate product is displaced as a consequence of the forging strain. This is indicated by reference numeral D in Figure 4.

During the forging, preferably by applying a mechanical as well as a thermal impact to the intermediate product, its microstructure, structural integrity, stability or rigidity is preferably improved, e.g. as compared to a component which is solely buildup by additive means.

Figure 3 shows that a plurality of constituents, ingredients or base materials, such as powders may be provided for the manufacture of the intermediate product. This is indicated by a first material, e.g. taken for a first layer and the further, different, second material, e.g. taken for a subsequent layer L. The first material M1 and the second material M2 may be fundamentally different, such as one of metallic and the other one of ceramic nature.

During or affected by the described forging process, preferably by a single die forging process, said different materials M1 and M2 may e.g. be mixed or joint or otherwise structurally merged such that e.g. the compound material (not explicitly indicated) is generated for the component 10. Said component may relate to a metallic matrix composite (MMC) or ceramic matrix composite (CMC) material, which are both applicable for turbine components due to their outstanding thermal and mechanical rigidity. To this effect the second material M2 may constitute e.g. a fiber of fiber-like material. Moreover, tungsten additives may be mixed to a base material M1.

It is further shown in Figure 4 that a base material P, such as a powder, for the manufacture of the intermediate product IP at least partly remains in a cavity CIP during the forging in order to avoid a structural collapse. In other words, said remaining powder constitutes powder which has deliberately not or not completely removed from the cavity after or during the AM manufacturing process. Said remaining powder P may then function as a mechanical support of the cavity CIP during the forging.

Provided that a forging temperature applied during the forging step is lower than melting temperature of the powder - which may easily exceed 1400° as in the case of superalloys for example - said powder may easily be removed after the forging in order to lay open the cavity CIP and enable its functionality.

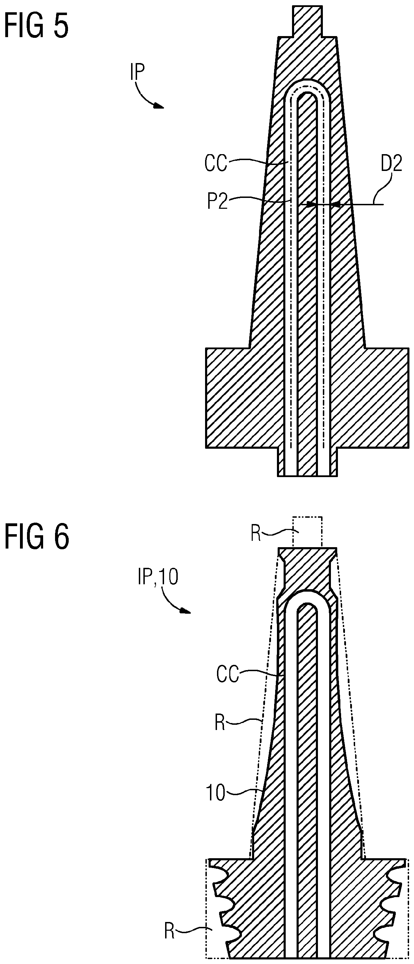

Figure 5 indicates that - during the forging step - the diameter D1 has shrunk to a dimension D2. Further, also a centreline or position of the cavity CIP may have changed to position P2. This deformation is preferably completely and accurately accounted for by the above described parametric algorithm for finding functionality during the method of designing an intermediate product. In other words, via a complex calculation, computation and/or simulation, the ideal geometry for the intermediate product may have been predicted, thereby accurately considering the forging effects and influences on the dimension, geometry as well as microstructure of the manufactured product. Numeral CC denotes the cavity of the component 10.

Figure 6 shows that the component 10 emerging from the intermediate product IP is further post-processed, such as worked or machined. Particularly it is shown, that the airfoil section is machined, e.g. in order to allow for the desired airfoil design. Said removal of material R or post-processing may be performed by any expedient means, such as grinding, discharge machining or other means. Prior to or during this post-processing, a separate thermal treatment (i.e. thermal treatment separate from the forging process) may be conducted in order to optimise microstructure or heal structural defects, such as weak structural links in the structure of the component 10. Further, a blade root of the component 10 may be machined in order to generate the necessary fixture, e.g. comprising dovetail- or fir-tree-like features at the blade root (cf. lower part of the article shown in Figures 3 to 7).

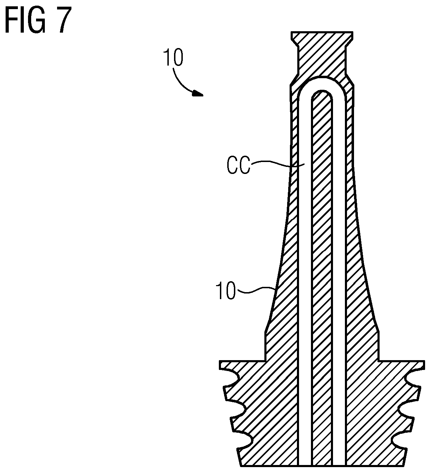

Figure 7 reveals the final component 10. This component was, thus, manufactured with a significantly reduced material scrap of wastage and with a particularly improved microstructure, e.g. as compared to the microstructure obtainable by additive manufacturing of the prior art.

The scope of protection of the invention is not limited to the examples given hereinabove. The invention is embodied in each novel characteristic and each combination of characteristics, which particularly includes every combination of any features which are stated in the claims, even if this feature or this combination of features is not explicitly stated in the claims or in the examples.

## Claims

1. Method of designing an intermediate product (IP) for additive manufacturing comprising calculating (a) a geometry (P2, D2) of the intermediate product (IP), wherein deformation (D) as a consequence of a subsequent forging process the additively manufactured intermediate product (IP) is subjected to in order to provide for a final component (10) is considered via accounting for a design of the final component (D2) by means of a form finding and/or parametric algorithm.

2. Method according to claim 1, wherein the final component comprises an internal cavity (CC) and the intermediate product is designed with an internal cavity as well.

3. Method according to claim 1 or 2, wherein the calculation of the geometry comprises providing for and/or proposing (b) an oversize geometry of the intermediate product, wherein thermo-mechanical loads during the forging process are considered.

4. Method according to claim 2 or 3, wherein process parameters of an additive manufacturing method for the intermediate product (IP), material properties and/or design features of the cavity (CC) of the final component (10) are defined (c) automatically or semi-automatically, e.g. in conjunction with a man-machine-interface (MMI) of a data processing device (200) .

5. Method according to claim 4, wherein the process parameters are defined (d), e.g. layerwise and localized, considering a desired material structure of the intermediate product (IP) and/or the final component (10), e.g. a desired structural rigidity or grain distribution.

6. Method according to one of the previous claims, wherein an additive manufacturing method for the intermediate product (IP) is a powder bed fusion method, such as selective laser melting or electron beam melting.

7. Computer program product comprising instructions which, when the according computer program is executed by a computer, cause the computer to carry out the calculation of the geometry (P2, D2) of the intermediate product (IP) according to one of the previous claims.

8. Method of additive manufacturing (e) an intermediate product (IP), particularly by selective laser melting or electron beam melting, an intermediate product (IP) according to the design as provided by the method according to one of the previous claims.

9. Method according to claim 8, wherein the intermediate product (IP) is provided with a cavity during the additive manufacture.

10. Method according to claim 8 or 9, wherein the intermediate product (IP) is provided with positioning features (FP) during the additive manufacture, wherein the positioning features (FP) allow for positioning the intermediate product (IP) in a forging apparatus (150).

11. Method of manufacturing a component (10) comprising the steps of:
- providing (e) an intermediate product (IP) according to one of claims 8 to 10,
- forging (f) the intermediate product (IP) in order to provide for the component (10), wherein the forging is carried out such that the intermediate product (IP) is deformed as considered by the method of one of claims 1 to 6.

12. Method according to claim 11, wherein the intermediate product (IP) is manufactured additively out of a powder bed and provided with a cavity (CIP), and wherein a base material (P), such as a powder, for the manufacture of the intermediate product (IP) at least partly remains in a cavity (CIP) during the forging in order to avoid a structural collapse.

13. Method according to claim 11 or 12, wherein the intermediate product (IP) is manufactured additively out a plurality of constituents (M1, M2) and wherein some of these constituents (M1,M2) are mixed, adhesively joined or modified during the forging.

14. Method according to one of claims 11 to 13, further comprising post-processing (g), such as thermal treatment, working or machining of the component (10).

15. Component (10) manufactured by the method according to one of claims 11 to 14, wherein the component (10) is a blade or vane of a turbo machine, such as a compressor blade of a gas turbine.
